# EUROPEAN PATENT SPECIFICATION

(11) **EP 4 093 647 B1**
(45) Date of publication and mention of the grant of the patent: **01.10.2025**
(21) Application number: 21701309.3
(22) Date of filing: 21.01.2021
(51) Int. Cl.: B61L 23/04, B61D 19/02, B61K 13/04

(54) **A FISH EYE CAMERA BASED MONITORING SYSTEM OF A RAIL VEHICLE, CORRESPONDING METHOD FOR MONITORING AND A RAIL VEHICLE WITH SUCH A SYSTEM**
FISCHAUGENKAMERA-BASIERTES ÜBERWACHUNGSSYSTEM EINES SCHIENENFAHRZEUGS, ENTSPRECHENDES ÜBERWACHUNGSVERFAHREN UND EIN SCHIENENFAHRZEUG MIT EINEM SOLCHEN SYSTEM
SYSTÈME DE SURVEILLANCE BASÉ SUR UN APPAREIL DE PRISE DE VUES À ULTRA-GRAND ANGLE D'UN VÉHICULE FERROVIAIRE, PROCÉDÉ CORRESPONDANT POUR LA SURVEILLANCE ET VÉHICULE FERROVIAIRE ÉQUIPÉ D'UN TEL SYSTÈME

(30) Priority: 24.01.2020 GB 202001030
(43) Date of publication of application: 30.11.2022
(73) Proprietor: ALSTOM Holdings, 93400 Saint-Ouen-sur-Seine (FR)
(72) Inventor: FLORENCE, Sébastien, 10709 Berlin (DE)
(74) Representative: Patentanwälte Bressel und Partner mbB
(86) International application number: PCT/EP2021/051257
(87) International publication number: WO 2021/148499

(56) References cited:
- EP-A1- 2 397 386
- EP-A1- 2 922 293
- EP-A1- 3 349 440
- JP-A- 2012 011 989
- JP-A- 2016 063 455
- AL-HARASIS RAGHAD ET AL: "On the design and implementation of a dual fisheye camera-based surveillance vision system", MULTIMEDIA TOOLS AND APPLICATIONS, vol. 78, no. 16, 22 April 2019 (2019-04-22), pages 22667 - 22689, XP036854041
- WONJUN KIM ET AL: "An efficient correction method of wide-angle lens distortion for surveillance systems", IEEE CIRCUITS AND SYSTEMS ISCAS 2009, 24 May 2009 (2009-05-24), pages 3206 - 3209, XP031479927

## Description

The invention relates to a monitoring system of a rail vehicle, a method for monitoring and a rail vehicle.

It is known to use sensors in rail vehicles for detecting a space outside the rail vehicle. WO 2016/075146 A1 discloses such a rail vehicle with suitable sensors. These sensors can be used to monitor an environment of the rail vehicle, e.g. for the purpose of monitoring the boarding or disembarking of passengers and the clearance of the platform for departure. It is also disclosed that sensor can be sensors of an image generating system.

WO2017/076995 A1 discloses means to monitor a monitored zone outside a car body of a rail vehicle, such as a boarding zone of a boarding platform and a platform gap. Such means can comprise multiple video cameras.

EP 2 397 386 A1 discloses a status monitoring apparatus of a railway vehicle for monitoring passengers and the like positioned close to a side of the railway vehicle on the outer side and the inner side of the vehicle.

JP 2012 011 989 A discloses a station home monitoring camera system.

Images of multiple cameras are usually displayed to a monitoring person, e.g. rail vehicle driver, individually, e.g. using multiple image displays. Although the multiple displays can be part of one single HMI unit, the monitoring person can be de-oriented by the organization how the image displays and the shown images are presented. Further, multiple images have to be viewed and checked in a relative short time which can create stress. Also, a coverage of the total region to be monitored is not ensured and death angles might exist.

There is the technical problem of providing a monitoring system of a rail vehicle, a method for monitoring and a rail vehicle which allow an easy and fast comprehension of visual information of a monitored zone and therefore improve an operational safety.

The solution to said technical problem is provided by the subject-matter with the features of the independent claims 1, 7 and 8.

Further advantageous embodiments of the invention are provided by the subject-matter with the features of the sub claims.

A monitoring system of a rail vehicle is proposed. The rail vehicle can comprise one or multiple car(s) of the rail vehicle. The rail vehicle can be a rail vehicle used for the carrying of cargo and/or passengers. A rail vehicle car can be a freight wagon, a passenger car but also a locomotive or a drive wagon. In the context of this disclosure, the rail vehicle can denote a car of a rail vehicle or an entity comprising more than one rail vehicle car.

The monitoring system comprises at least two image detecting devices for imaging different spatial areas beside the rail vehicle. An image detecting device can be a camera, in particular a CMOS- or CCD-camera. A spatial area beside the rail vehicle can denote a spatial area beside the long side of the rail vehicle. The image detecting devices can be installed on the rail vehicle. Alternatively, the image detecting devices can be installed or arranged stationary and external to the rail vehicle. In this case, image signals generated by said devices can be transmitted to the vehicle, in particular to an evaluation unit of the vehicle, by communication means, in particular in a wire-based or wireless manner.

Within this invention, the following coordinate system can be referred to. A longitudinal axis of the rail vehicle can be a roll axis of the rail vehicle. A direction of the longitudinal axis can correspond to the direction of travel of the rail vehicle if the rail vehicle travels straight forward. A lateral axis of the rail vehicle can be a pitch axis of the rail vehicle. The long sides of the rail vehicle or a car of the rail vehicle can be spaced apart from one another with a predetermined distance, e.g. the width of the rail vehicle, along the lateral axis. A vertical axis of the rail vehicle can be a yaw axis of the rail vehicle. A direction of the vertical axis can be oriented against an orientation of a gravitational force. A floor and a ceiling of the rail vehicle or a car of the rail vehicle can be spaced apart from one another with a predetermined distance, e.g. the height of the rail vehicle, along the vertical axis. The axes can form a Cartesian coordinate system. In case that the rail vehicle comprises multiple cars, the coordinate system can refer to one car of the rail vehicle.

Directional terms such as "beside" can refer to the lateral axis. Directional terms such as "in front of", "ahead", "behind", "forwards", "backwards" can refer to the longitudinal axis. Directional terms such as "under", "below", "above" and "over" can refer to the vertical axis.

Each image detecting device can have a field of view. Said field of view can cover a section of the area beside the rail vehicle. The fields of view of the at least two image detecting devices overlap at least partially or adjoin one another. Adjoining fields of view can have a common border but no further spatial overlap.

If the monitoring system comprises more than two image detecting devices, overlapping or adjoining sections comprise only sections of not more than two image detecting devices. In other words, there is no section in which the fields of view of more than two image detecting devices overlap or adjoin.

Preferably, edge sections of the respective fields of view overlap or adjoin, in particular edge sections arranged at a front or rear end of the respective fields of view. For example, a front section of the field of view of a first image detecting device can overlap or adjoin a rear section of the field of view of a second image detecting device. A front section of the field of view of said second image detecting device can then overlap or adjoin a rear section of the field of view of a third image detecting device and so on. In this case, the image detecting devices can be arranged such that their respective fields of view are arranged next to each other along the longitudinal axis.

The monitoring system of the rail vehicle further comprises at least one evaluation unit. The at least one evaluation unit can be provided by at least one computing unit. A computing unit can e.g. provided by or comprise a microcontroller or integrated circuit. The evaluation unit can be installed on the rail vehicle. It is, however, also possible that the evaluation unit is installed external to the rail vehicle. In this case, the output signals of the image detecting devices can be transmitted e.g. wirelessly to said evaluation unit.

The evaluation unit can be connected to each image detecting device, wherein output signals, e.g. images, of the image detecting devices can be processed by the evaluation unit.

Further, the monitoring system comprises at least one display device for displaying an image to a user, in particular to a driver of the rail vehicle. The display device can e.g. by a display panel such as a LCD panel or the like.

Further, the images generated by the at least two image detecting devices are fused to a panoramic image by means of the evaluation unit. Suitable methods for fusing two or more than two image to one single panoramic image are known to the skilled person. Exemplary methods can be methods for image stitching. The panoramic image can e.g. be provided by a band or ribbon of multiple images (image band). The image fusion can also be denoted as image merging.

Further, the panoramic image is displayed by means of the display device. The display can be installed on the rail vehicle. It is, however, also possible that the display device is installed external to the rail vehicle. The display device can e.g. be arranged in a driver's cabin of the rail vehicle. It is, of course, also possible to transmit the output signals of the image detecting devices or the fused image to a display unit arranged outside the rail vehicle, e.g. in a central control room.The display device can comprise one or more display panels. In the first case, the panoramic image is displayed on one single display panel. In the latter case, the panoramic image can be split up into different partial images, wherein each partial image is displayed on one of the display panels, in particular in the correct arrangement to provide the panoramic visual effect to the user.

This advantageously allows to provide visual information of a spatial area beside the trail vehicle in way that these information can be quickly and easily comprehend by a monitoring person, e.g. a rail vehicle driver. The monitoring system can e.g. be used before or during the departure of the rail vehicle from a platform to visually check that the platform is secured and no person can be injured by the closing of doors or the movement of the rail vehicle.

Instead of monitoring multiple images, e.g. in order to check the adequate clearance of a platform before departure of the rail vehicle, only one single image needs to be monitored. This advantageously improves the monitoring quality and therefore also improves the operational safety when operating the rail vehicle.

Further, fusing the images allows to avoid having redundant portions in multiple images which complicates or prolongs the analysis of the images by a user or an image analysis unit. The fused image contains only the needed information and therefore reduces required storage space in comparison to multiple non-fused images as well as the time and computational effort to analyze the image, e.g. in order to perform an object detection.

If the rail vehicle comprises multiple cars, it is possible to fuse images generated by image detecting devices which are installed on different rail vehicle cars of the same rail vehicle unit. A rail vehicle unit can e.g. comprise two or more vehicle cars or all vehicle cars of the rail vehicle. Image fusion can e.g. be performed depending on a coupling state of a rail vehicle car. In the case of a decoupled state, only images generated by image detecting devices which are installed on the respective rail vehicle car can be fused. In the case of a coupled state, images generated by image detecting devices which are installed on the respective coupled rail vehicle cars can be fused. It is thus possible to adapt the number of fused images to the coupling state. The coupling state can e.g. be detected by an adequate detecting means, e.g. a sensor, which is connected to the evaluation unit.

According to the invention, the image detecting device is a fish-eye camera. Further in an unclaimed embodiment the image detecting device can alternatively be a wide-angle camera. A wide-angle camera can denote a camera having a wide-angle lens. An angle of view of the wide-angle camera can be in the range of 60° (inclusive) to 150° (exclusive).

A fish-eye camera can denote a camera have a fish-eye lens. An angle of view of the wide-angle camera is in the range of 150° (inclusive) to 180° (exclusive). An angle of view of the wide-angle camera can also be in the range of 150° (inclusive) to 360° (exclusive).

The use of both, the wide-angle camera and the fish-eye camera advantageously reduces the number of image detecting devices required for generating the fused image which shows the monitored zone.

The use of such a wide-angle camera advantageously allows to cover a large field of view with one single image detecting device with an acceptable image distortion which simplifies the image fusion. The use of a fish-eye camera advantageously allows to minimize the number of image detecting device required for generating the fused image which shows the monitored zone. Further, for images generated by the fish-eye camera, a dewarping of the images used for fusing is performed before fusing.

Dewarping can be a process correcting the effects of distortion in a captured image, in particular the distortion caused by the fish-eye optical elements. Thus, a flat captured image can be provided.

Dewarping simplifies the fusing process since less distorted images are used for the fusing. This also results in a better quality of the fused image.

In another embodiment, the field of view of an image detecting device extends along the longitudinal direction as well as against the longitudinal direction of the rail vehicle. In other words, the image detecting devices are arranged such that their respective field of view covers a region ahead of the position of the image detecting device and also a region behind the position of the image detecting device with respect to the longitudinal axis of the rail vehicle. This advantageously simplifies an installation of image detecting devices on the rail vehicle and also the image fusion process to generate a fused image with minimal distortion.

In another embodiment, an angle between a vertical axis of the rail vehicle and the optical axis of the image detecting device or a projection of the optical axis into the plane spanned by the vertical axis and the lateral axis of the rail vehicle is in the range of 90° (inclusive) to 180° (exclusive) or in the range of 180° (exclusive) to 270° (inclusive). The angle between the vertical axis and the optical axis can be 45° or 235°. The angle between the vertical axis and the lateral axis can be 90°. In other words, the direction of view of an image detecting device can be inclined downwards.

It is possible that the image detecting devices can be arranged such that the optical axis is arranged within a plane spanned by the vertical axis and the lateral axis of the rail vehicle. It is, however, also possible that the optical axis is arranged outside said plane. In this case, the direction of view can further be inclined forwards or backwards.

This advantageously provides a good coverage of the spatial area beside the rail vehicle, in particular if the image detecting devices are arranged in an upper section, e.g. a roof section or in an upper section of a sidewall, of the rail vehicle. Preferably, the image detecting devices are arranged such that the platform gap can be reliably imaged and is not obstructed by parts of the rail vehicle.

Further according to the invention, a housing of the image detecting device is arranged within an outer shell of the rail vehicle. In other words, no part of an image detecting device protrudes from the rail vehicle. This advantageously ensures the protection of the image detecting devices and therefore the reliability of the functionality of the monitoring system. Further, the wind resistance of the rail vehicle is minimized.

In another embodiment, the image detecting device is arranged above a vehicle door. Further, a longitudinal offset along the longitudinal axis between a geometric center point of the vehicle door opening and the image detecting device, in particular a reference point of the image detecting device, can be smaller than a width of the door opening along the longitudinal axis. Said offset can e.g. be zero which means that the image detecting device is arranged centrally above the vehicle door with respect to the vehicle door.

This advantageously allows to reliably cover an entrance or exit area for passengers of the rail vehicle with minimal distortion which, in turn, ensures that said area is presented with a high quality in the fused image. This again improves the monitoring quality.

In another embodiment, the display device is an ultrawide display panel. An ultrawide display panel denotes a display panel with an aspect ratio of 21:9 or higher. The ultrawide display panel can be part of a driver panel or a panel separate from the driver panel. The driver panel is e.g. used to display further information, e.g. on the rail vehicle speed etc. This advantageously allows an easy-to-comprehend visual representation of the fused image to a monitoring person.

In another embodiment, the panoramic image is displayed vertically. In this case, the display device, in particular the ultrawide display panel, can be arranged vertically. This advantageously allows an intuitive and thus very easy-to-comprehend visual representation of the fused image to a monitoring person.

Alternatively, the panoramic image is displayed horizontally. In this case, the display device, in particular the ultrawide display panel, can be arranged horizontally. This advantageously allows a good integration into a monitoring room while the easy-to-comprehend nature of the presentation is still preserved.

Further proposed is method of monitoring an environment of a rail vehicle, wherein images generated by at least two image detecting devices with overlapping or adjoining fields of view covering different spatial areas beside the rail vehicle are fused to a panoramic image, wherein the panoramic image is displayed by means of the display device.

The method can be performed by a monitoring system according to one of the embodiments described in this disclosure. Thus, the monitoring system can be configured to perform said method. Advantages for such a method have been outlined with respect to the embodiments of the monitoring system.

An image detecting device is a fish-eye camera with an angle of view in the range of 150° (inclusive) to 180° (exclusive) or in the range of 150° (inclusive) to 360° (exclusive).

Before fusing the images, each or selected images generated by the image detecting devices are dewarped or dewrapped. Such a dewarping or dewrapping can be used in order perform a perspective correction of an image and/or to reverse the effects of geometric distortions caused by the camera lens. Such methods for image correction are known to the skilled person. Dewrapping or dewarping advantageously ensures a simpler and better fusion of the images and also a better image quality of the fused image.

In particular, images generated with a wide-angle camera or a fish-eye camera can thus be converted to a normal image, e.g. an image based on an angle of view in the range of 30° (inclusive) to 60° (exclusive).

Before and/or after fusing the images, the images generated by the image detecting devices and/or the fused image can be filtered, in particular to enhance an image quality but also to improve the reliability of the fusion process.

Further, an automated image-based identification of objects in the fused image or in each of the images generated by the image detecting devices. Such an identification can e.g. comprise a segmentation step. Identified objects can be highlighted in the fused image. It is further possible that an object identified in one of the images generated by the image detecting devices provides a candidate object. Then, the fused image can be analyzed in order to confirm the presence of the candidate object.

Further proposed is rail vehicle with a monitoring system according to one of the embodiments described in this disclosure. Corresponding advantages have been outlined with respect with respect to the embodiments of the monitoring system.

The invention will be described with reference to the attached figures. The figures show:
- Figure 1: a schematic block diagram of a monitoring system according to the invention,
- Figure 2: a schematic top view on a rail vehicle,
- Figure 3: a schematic sectional view of a rail vehicle, and
- Figure 4: a schematic flow diagram of a method for monitoring according to the invention.

In the following, the same reference numerals denote elements with the same or similar technical features.

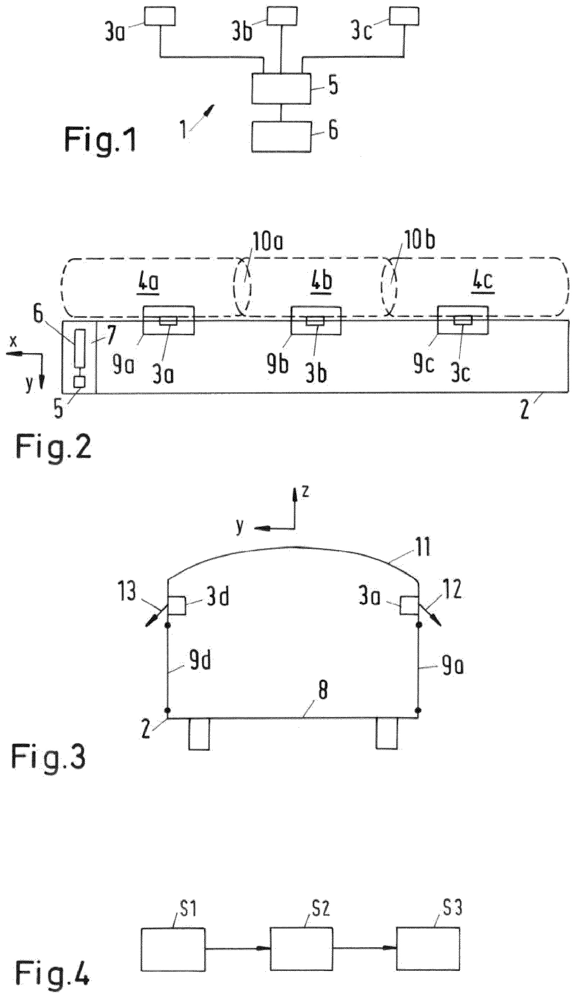

Figure 1 shows a schematic block diagram of a monitoring system 1 of a rail vehicle 2 (see e.g. figure 2), wherein the monitoring system 1 comprises at three cameras 3a, 3b, 3c for imaging different spatial areas beside the rail vehicle 2.

The cameras 3a, 3b, 3c are installed on the rail vehicle 2 such that the field of view 4a, 4b, 4c of each camera overlaps with the field of view 4a, 4b, 4c of at least one other camera 4a, 4b, 4c partially.

Further, the monitoring system 1 comprises at least one evaluation unit 5 and at least one display device 6. The evaluation unit 5 can be an image processing unit and be provided by a microcontroller. The evaluation unit 5 can be connected to each camera 3a, 3b, 3c by wired or wireless means. The display device can be connected to the evaluation unit 5 by wired or wireless means. While the cameras 3a, 3b, 3c are installed on the rail vehicle 1, the evaluation unit 5 and/or the display device 6 may be also installed on the rail vehicle 2, e.g. in a driver's cabin 7 of the rail vehicle 2, or external to the rail vehicle 2, e.g. in a control center.

By means of the evaluation unit 5, the images generated by the cameras 3a, 3b, 3c are fused or merged to a panoramic image. Before fusing, a dewarping of the images can be performed. Said panoramic image is then displayed by means of the display device 6 to a monitoring person.

The cameras 3a, 3b, 3c can be wide-angle or fish-eye cameras. The display unit 6 can be a ultrawide display panel.

Figure 2 shows a schematic top view of the rail vehicle 2 with a monitoring system 1 as described with reference to figure 1. Shown is a longitudinal axis x and a lateral axis y of the rail vehicle 2. Both axes can span a plane which is oriented parallel to a floor 8 of the rail vehicle 2 and/or perpendicular to a vertical axis z of the rail vehicle 2 (see figure 3). The vertical axis z can be oriented parallel and against the direction of a gravitational force.

Further shown is a driver's cabin 7 of the rail vehicle 2, wherein the display unit 6 and the evaluation unit 5 are arranged within the driver's cabin 7. It is, however, also possible to arrange the evaluation unit 5 outside the driver's cabin 7.

Further shown are vehicle doors 9a, 9b, 9c which are arranged on a first (right) long side of the rail vehicle 2. It is, of course, possible that further vehicle doors can be arranged on a second (left) long side of the rail vehicle 2. Further shown are cameras 3a, 3b, 3c and their respective fields of view 4a, 4b, 4c with respect to the rail vehicle 2, in particular to a vehicle-based coordinate system comprising the aforementioned axes x, y, z.

Figure 2 shows that cameras 3a, 3b 3c are arranged above a vehicle door 9a, 9b, 9c, wherein a longitudinal offset along the longitudinal axis x between a geometric center point of the vehicle door opening and the cameras 3a, 3b, 3c is smaller than a width of the door opening along the longitudinal axis x. It is, however, also possible to arrange cameras 3a, 3b, 3c above and between vehicle doors 9a, 9b, 9c,wherein the longitudinal offset along the longitudinal axis x between a geometric center point of the vehicle door opening and the cameras 3a, 3b, 3c is larger than a width of the door opening along the longitudinal axis x.

With respect to the rail vehicle 2, the fields of view 4a, 4b, 4c of each of the cameras 3a, 3b, 3c covers an area outside the rail vehicle 2 and beside the first long side of the rail vehicle 2. With respect to the longitudinal axis x of the rail vehicle 2, the field of view 4a of the first camera 3a is arranged ahead of the field of view 4b of the second camera 3b. Moreover, a rear end section of the field of view 4a of the first camera 3a overlaps a front end section of the field of view 4b of the second camera 3b in a first overlapping section 10a. Further, the field of view 4b of the second camera 3b is arranged ahead of the field of view 4c of the third camera 3c. Moreover, a rear end section of the field of view 4b of the second camera 3b overlaps a front end section of the field of view 4c of the third camera 3c in a further overlapping section 10c.

Image features within these overlapping sections 10b, 10c can be used to perform the image fusion process. A distance between the vehicle doors 9a, 9b, 9c or the cameras 3a, 3b, 3c along the longitudinal axis can be in the range of 10 m to 20 m. A maximum width of the fields of view 4a, 4b, 4c along the lateral axis y can be 3.5 m. A maximum length of the fields of view 4a, 4b, 4c along the longitudinal axis y can be 25 m. It is to be understood that these values are exemplary values and other values depending on the setup can be chosen.

It is shown that, with respect to a position of a camera 3a, 3b, 3c along the longitudinal axis x, its respective field of view 4a, 4b, 4c extends in the direction of the longitudinal axis x as well as against the direction of the longitudinal axis x, wherein the direction is indicated by an arrowhead of the longitudinal axis x.

Figure 3 shows a schematic longitudinal section of a rail vehicle 2. Shown is the rail vehicle floor 8 and the ceiling 11, wherein the vertical axis z of the rail vehicle 2 extends from the floor 8 to the ceiling 11. Further shown a cameras 3a, 3d, wherein a first camera 3a is arranged on the first long side of the rail vehicle 2, wherein a fourth camera 3d is arranged on a second long side of the rail vehicle 2.

Further shown is an optical axis 12 of the first camera 3a and an optical axis 13 of the fourth camera 3d. An angle between the optical axis 12 of the first camera 3a and the vertical axis z is 225°, wherein an angle between the optical axis 13 of the fourth camera 3d and the vertical axis z is 135°. Further shown is that the cameras 3a, 3d are arranged above vehicle doors 9a, 9d of the rail vehicle 1 which are arranged within the first long side and the second long side.

A housing of the cameras 3a, 3d is arranged within an outer shell of the rail vehicle 2.

Figure 4 shows a schematic flow diagram of a method for monitoring an environment of a rail vehicle 2. In a first step S1, images are generated by cameras 3a, 3b, 3c, 3d of a monitoring system 1, wherein these cameras 3a, 3b, 3d, 3c have overlapping or adjoining fields of view 4a, 4b, 4c covering different spatial areas beside the rail vehicle 2. In a second step S2, these images are fused to a panoramic image by means of an evaluation unit 5. In a third step S3, the panoramic image is displayed by means of the display device 6.

The second step S2 can comprise the substep of filtering the images generated by the cameras 3a, 3b, 3c, 3d and/or the fused image. Alternatively or in addition, the second step S2 can comprise the substep of dewarping the images generated by the cameras 3a, 3b, 3c, 3d. Alternatively, the dewarping can be performed by the camera 3a, 3b, 3c in the first step S1.

### Reference numerals

- 1: monitoring system
- 2: rail vehicle
- 3a, 3b, 3c, 3d: camera
- 4a, 4b, 4c: field of view
- 5: evaluation unit
- 6: display device
- 7: driver's cabin
- 8: floor
- 9a, 9b, 9c, 9d: vehicle door
- 10a, 10b: overlapping section
- 11: ceiling
- S1: first step
- S2: second step
- S3: third step

## Claims

1. A monitoring system of a rail vehicle (2), wherein the monitoring system (1) comprises at least two image detecting devices (3a,..., 3d) for imaging different spatial areas beside the rail vehicle (2), wherein fields of view (4a, 4b, 4c) of the at least two image detecting devices (3a,..., 3d) overlap at least partially or adjoin one another, wherein the monitoring system (1) of the rail vehicle (2) further comprises at least one evaluation unit (5) and at least one display device (6), wherein the images generated by the at least two image detecting devices (3a,..., 3d) are fused to a panoramic image by means of the evaluation unit (5), wherein the panoramic image is displayed by means of the display device (6), wherein a dewarping of the images is performed before fusing,
**characterized in that**
the image detecting device (3a,..., 3d) is a fish-eye camera with an angle of view in the range of 150° inclusive to 180° exclusive, wherein a housing of the image detecting device (3a,..., 3d) is arranged within an outer shell of the rail vehicle (2).

2. The monitoring system according to claim 2, **characterized in that** the field of view (4a, 4b, 4c) of an image detecting device (3a,..., 3d) extends along the longitudinal direction as well as against the longitudinal direction of the rail vehicle (2).

3. The monitoring system according to one of the preceding claims, **characterized in that** an angle between a vertical axis (z) of the rail vehicle (2) and the optical axis (12, 13) of the image detecting device (3a,..., 3d) is in the range of 90° inclusive to 180° exclusive.

4. The monitoring system according to one of the preceding claims, **characterized in that** the image detecting device (3a,..., 3d) is arranged above a vehicle door (9a,..., 9d).

5. The monitoring system according to one of the preceding claims, **characterized in that** the display device (6) is an ultrawide display panel.

6. The monitoring system according to one of the preceding claims, **characterized in that** the panoramic image is displayed vertically or horizontally.

7. A method of monitoring an environment of a rail vehicle, wherein images generated by at least two image detecting devices (3a,..., 3d) with overlapping or adjoining fields of view (4a,... , 4c) covering different spatial areas beside the rail vehicle (2) are fused to a panoramic image, wherein a dewarping of the images is performed before fusing, wherein the panoramic image is displayed by means of the display device (6),
**characterized in that** the
image detecting device (3a,..., 3d) is a fish-eye camera with an angle of view in the range of 150° inclusive to 180° exclusive, wherein a housing of the image detecting device (3a,... , 3d) is arranged within an outer shell of the rail vehicle (2).

8. A rail vehicle with a monitoring system (1) according to one of the claims 1 to 6.

## Patentansprüche

1. Überwachungssystem für ein Schienenfahrzeug (2), wobei das Überwachungssystem (1) mindestens zwei Bildaufnahmevorrichtungen (3a, ... , 3d) zum Abbilden unterschiedlicher Raumabschnitte neben dem Schienenfahrzeug (2) abzubilden, wobei Sichtfelder (4a, 4b, 4c) der mindestens zwei Bildaufnahmevorrichtungen (3a, ... , 3d) sich zumindest teilweise überlappen oder aneinander anschließen, wobei das Überwachungssystem (1) des Schienenfahrzeugs (2) ferner mindestens eine Auswerteeinheit (5) und mindestens eine Anzeigevorrichtung (6) umfasst, wobei die von den mindestens zwei Bildaufnahmevorrichtungen (3a, ... , 3d) erzeugten Bilder zu einem Panoramabild zusammengeführt werden, wobei das Panoramabild mittels der Anzeigevorrichtung (6) angezeigt wird, wobei vor dem Zusammenführen eine Entzerrung der Bilder durchgeführt wird, **dadurch gekennzeichnet, dass** die Bildaufnahmevorrichtung (3a, ... , 3d) eine Fischaugenkamera mit einem Blickwinkel im Bereich von 150° (eingeschlossen) bis 180° (ausgeschlossen) ist, wobei ein Gehäuse der Bildaufnahmevorrichtung (3a, ... , 3d) innerhalb einer Außenhülle des Schienenfahrzeugs (2) angeordnet ist.

2. Überwachungssystem nach Anspruch 2, **dadurch gekennzeichnet, dass** das Sichtfeld (4a, 4b, 4c) einer der Bildaufnahmevorrichtungen (3a, ... , 3d) sich sowohl entlang einer Längsrichtung als auch entgegen der Längsrichtung des Schienenfahrzeugs (2) erstreckt.

3. Überwachungssystem nach einem der vorstehenden Ansprüche, **dadurch gekennzeichnet, dass** ein Winkel zwischen einer vertikalen Achse (z) des Schienenfahrzeugs (2) und einer optischen Achse (12, 13) der Bildaufnahmevorrichtung (3a, ... , 3d) im Bereich von 90° (eigeschlossen) bis 180° (ausgeschlossen) liegt.

4. Überwachungssystem nach einem der vorstehenden Ansprüche, **dadurch gekennzeichnet, dass** die Bildaufnahmevorrichtung (3a, ... , 3d) über einer Fahrzeugtür (9a, ... , 9d) angeordnet ist.

5. Überwachungssystem nach einem der vorstehenden Ansprüche, **dadurch gekennzeichnet, dass** die Anzeigevorrichtung (6) ein Ultrabreitbild-Displaypanel ist.

6. Überwachungssystem nach einem der vorstehenden Ansprüche, **dadurch gekennzeichnet, dass** das Panoramabild vertikal oder horizontal angezeigt wird.

7. Verfahren zur Überwachung einer Umgebung eines Schienenfahrzeugs, wobei Bilder von mindestens zwei Bildaufnahmevorrichtungen (3a, ... , 3d) mit überlappenden oder aneinander anschließenden Sichtfeldern (4a, ... , 4c), welche verschiedene räumliche Bereiche neben dem Schienenfahrzeug (2) abdecken, zu einem Panoramabild zusammengeführt werden, wobei die Bildaufnahmevorrichtung (3a, ..., 3d) eine Fischaugenkamera mit einem Blickwinkel im Bereich von 150° (eingeschlossen) bis 180° (ausgeschlossen) ist, wobei vor dem Zusammenführen eine Entzerrung der Bilder durchgeführt wird, wobei das Panoramabild mittels der Anzeigevorrichtung (6) angezeigt wird, wobei ein Gehäuse der Bildaufnahmevorrichtung (3a, ..., 3d) innerhalb einer Außenhülle des Schienenfahrzeugs (2) angeordnet ist.

8. Schienenfahrzeug mit einem Überwachungssystem (1) gemäß einem der Ansprüche 1 bis 6.

## Revendications

1. Système de surveillance d'un véhicule ferroviaire (2), dans lequel le système de surveillance (1) comprend au moins deux dispositifs de détection d'images (3a, ... , 3d) pour l'imagerie de différents zones spatiales différentes à côté du véhicule ferroviaire (2),
dans lequel les champs de vision (4a, 4b, 4c) des au moins deux dispositifs de détection d'images (3a, ... , 3d) se chevauchent au moins partiellement ou sont adjacents les uns aux autres, dans lequel le système de surveillance (1) du véhicule ferroviaire (2) comprend en outre au moins une unité d'évaluation (5) et au moins un dispositif d'affichage (6), dans lequel les images générées par les au moins deux dispositifs de détection d'images (3a,... , 3d) sont fusionnées en une
image panoramique au moyen de l'unité d'évaluation (5), dans lequel l'image panoramique est affichée au moyen du dispositif d'affichage (6), dans lequel une correction de la distorsion des images est effectuée avant la fusion, **caractérisé en ce que** le dispositif de détection d'images (3a, ... 3d) est une caméra fish-eye avec un angle de vue dans la plage de 150° inclus à 180° exclus, dans lequel un boîtier du dispositif de détection d'images (3a, ..., 3d) est disposé à l'intérieur d'une enveloppe extérieure du véhicule ferroviaire (2).

2. Système de surveillance selon la revendication 2, **caractérisé en ce que** le champ de vision (4a, 4b, 4c) d'un dispositif de détection d'images (3a, ... , 3d) s'étend le long de la direction longitudinale ainsi que la direction opposée la direction longitudinal du véhicule ferroviaire (2).

3. Le système de surveillance selon l'une des revendications précédentes, **caractérisé en ce que** un angle entre un axe vertical (z) du véhicule ferroviaire (2) et l'axe optique (12, 13) du dispositif de détection d'images (3a, ... , 3d) est compris entre 90° inclus et 180° exclusif.

4. Système de surveillance selon l'une des revendications précédentes, **caractérisé en ce que** le dispositif de détection d'images (3a, ... , 3d) est disposé au-dessus d'une porte de véhicule (9a, ... , 9d).

5. Système de surveillance selon l'une des revendications précédentes, **caractérisé en ce que** le dispositif d'affichage (6) est un panneau d'affichage ultra-large.

6. Système de surveillance selon l'une des revendications précédentes, **caractérisé en ce que** l'image panoramique est affichée verticalement ou horizontalement.

7. Procédé de surveillance d'un environnement d'un véhicule ferroviaire, dans lequel des images générées
par au moins deux dispositifs de détection d'images (3a, ... , 3d) avec chevauchement ou contiguïté champs de vision (4a, ... , 4c) couvrant différentes zones spatiales à côté du véhicule ferroviaire (2) sont fusionnés en une image panoramique, dans laquelle une correction de la distorsion des images est effectuée avant la fusion, dans laquelle l'image panoramique est affichée au moyen du dispositif d'affichage (6), **caractérisé en ce que** le dispositif de détection d'images (3a, ... 3d) est une caméra fish-eye avec un angle de vue dans la plage de 150° inclus à 180° exclus, dans lequel un boîtier du dispositif de détection d'images (3a, ..., 3d) est disposé à l'intérieur d'une enveloppe extérieure du véhicule ferroviaire (2).

8. Véhicule ferroviaire avec un système de surveillance (1) selon l'une des revendications 1 à 6.
